# EUROPEAN PATENT APPLICATION

(11) **EP 2 042 561 A1**
(43) Date of publication of application: **01.04.2009**
(21) Application number: 07790512.3
(22) Date of filing: 09.07.2007
(51) Int. Cl.: C08L 101/10, C08J 3/205, C08K 3/22, C08K 3/36

(54) **OXIDE PARTICLE-CONTAINING RESIN COMPOSITION AND METHOD FOR PRODUCING THE SAME**

(30) Priority: 14.07.2006 JP 2006194891
(71) Applicant: JSR Corporation, Tokyo 104-0045 (JP)
(72) Inventor: KANAMORI, Tarou, Tokyo 1040045 (JP); YAJIMA, Keisuke, Tokyo 1040045 (JP)
(74) Representative: TBK-Patent
(86) International application number: PCT/JP2007/063691
(87) International publication number: WO 2008/007649

(57) **Abstract**

An oxide fine particle-containing resin composition is produced by mixing: (A) silicon oxide fine particles and/or metal oxide fine particles; and (B) an organic polymer having a silyl group in which a hydrolyzable group and/or a hydroxyl group is bonded to the silicon atom, in an organic solvent in the presence of a basic compound, an acidic compound or a metal chelate compound, thereby dispersing the oxide fine particles (A) in the organic solvent. The oxide fine particle-containing resin composition is a silyl group-containing resin composition in which the oxide fine particles are highly dispersed and gives a silyl group-containing resin cured product excellent in transparency and resistant to yellowing discoloration.

## Description

### FIELD OF THE INVENTION

The present invention relates to resin compositions in which silicon oxide fine particles and/or metal oxide fine particles are highly dispersed in an organic solvent that contains an organic polymer having a specific silyl group, and also relates to cured products of the compositions.

### BACKGROUND OF THE INVENTION

Complexing organic polymers with silicon oxide fine particles or metal oxide fine particles (hereinafter, collectively the oxide fine particles) has been studied to give organic polymer materials having various functions. The organic polymers and the oxide fine particles each are frequently prepared in the form of dispersion. The organic polymers are hardly dissolved in water and therefore organic solvents are used as dispersion media. On the other hand, the oxide fine particles are easily aggregated in organic solvents and are frequently dispersed in aqueous media. There have been reported techniques to finely disperse the oxide fine particles in organic solvents. Patent Document 1 describes that phosphoric acids, sulfonic acids or carboxylic acids having organic groups of 6 or more carbon atoms are used. Patent Document 2 teaches use of organic compounds having oxyalkylene groups or esters such as phosphates having oxyalkylene groups. Patent Document 3 discloses that silane compounds having oxyalkylene groups are used.

These compounds permit oxide fine particles and organic polymers to be dispersed in organic solvents with good dispersibility while forming complexes. However, the compounds have bad compatibility with the organic polymer, and forming a film by evaporating the solvent often results in blushing. Although controlling the film-forming conditions provides transparent films, the films often have problems such as discoloration and cracks by UV irradiation because of the presence of the phosphoric acids or the like having organic groups of 6 or more carbon atoms or the compounds having oxyalkylene groups.

Silicon oxide fine particles can be dispersed stably in organic solvents because of their surface electric charge which gives good dispersibility. However, when they are mixed with organic polymers, the silicon oxide fine particles are frequently aggregated to cause blushing or the obtainable films are frequently cracked.
Patent Document 1: JP-A-2004-283822
Patent Document 2: JP-A-2005-185924
Patent Document 3: JP-A-2004-99879

### DISCLOSURE OF THE INVENTION

The present invention aims to solve the problems in the art as described above. It is therefore an object of the invention to provide silyl group-containing resin cured products excellent in transparency and resistant to yellow discoloration, silyl group-containing resin compositions which are capable of giving such cured products and in which oxide fine particles are highly dispersed, and processes for the production of the compositions.

The present inventors studied diligently to solve the aforementioned problems. They have then found that when oxide fine particles are treated in the presence of a basic compound, an acidic compound or a metal chelate compound in an organic solvent that contains an organic polymer having a silyl group in which a hydrolyzable group and/or a hydroxyl group is bonded to the silicon atom, a silyl group-containing resin composition is obtained in which the oxide fine particles are highly dispersed in the organic solvent that contains the organic polymer having the specific silyl group. The inventors have further found that cured products from the compositions are excellent in transparency and resistant to yellow discoloration. The present invention has been completed based on the findings.

An oxide fine particle-containing resin composition according to the present invention is produced by mixing:
(A) silicon oxide fine particles and/or metal oxide fine particles; and
(B) an organic polymer having a silyl group in which a hydrolyzable group and/or a hydroxyl group is bonded to the silicon atom;
   in an organic solvent in the presence of a basic compound, an acidic compound or a metal chelate compound, thereby dispersing the oxide fine particles (A) in the organic solvent.

The oxide fine particles (A) and the silyl group-containing organic polymer (B) are preferably mixed in the presence of a basic compound. More preferably, the oxide fine particles (A) and the silyl group-containing organic polymer (B) are mixed with a bead mill. Preferably, 100 parts by weight of the oxide fine particles (A) and 1 to 1000 parts by weight in terms of solid of the silyl group-containing organic polymer (B) are mixed.

In the silyl group-containing organic polymer (B), the content of the silyl groups in which a hydrolyzable group and/or a hydroxyl group is bonded to the silicon atom is preferably in the range of 0.1 to 2 wt% in terms of silicon atoms relative to an organic polymer prior to the introduction of the specific silyl groups.

A cured product according to the present invention is obtained from the oxide fine particle-containing resin composition.

A coating composition according to the present invention comprises the oxide fine particle-containing resin composition. A multilayer structure according to the present invention comprises an organic base and a film on the organic base, the film being obtained from the coating composition.

### ADVANTAGES OF THE INVENTION

According to the compositions of the present invention, the oxide fine particles are highly dispersed in an organic solvent that contains the specific silyl group-containing organic polymer without using phosphoric acids or the like having organic groups of 6 or more carbon atoms or compounds having oxyalkylene groups. The compositions are excellent in dispersion stability and give transparent cured products that contain the oxide fine particles and the specific silyl group-containing organic polymer. Use of UV absorbing metal oxide fine particles as oxide fine particles provides an advantage that the obtainable cured products are useful as UV absorbing materials. Further, use of highly refractive metal oxide fine particles results in cured products that are useful as encapsulating materials for light emitting elements such as blue LED elements and ultraviolet LED elements.

### PREFERRED EMBODIMENTS OF THE INVENTION

Oxide fine particle-containing resin compositions of the invention are obtained by mixing and dispersing oxide fine particles (A) and an organic polymer with a specific silyl group (B) in an organic solvent in the presence of a basic compound, an acidic compound or a metal chelate compound, without using phosphoric acids or the like having organic groups of 6 or more carbon atoms or compounds having oxyalkylene groups.

### [Oxide fine particles (A)]

The oxide fine particles (A) used in the invention are silicon oxide fine particles and/or metal oxide fine particles. The metal oxide fine particles are not particularly limited as long as they are fine particles of metal oxides. Examples include fine particles of metal oxides such as antimony oxide, zirconium oxide, anatase titanium oxide, rutile titanium oxide, brookite titanium oxide, zinc oxide, tantalum oxide, indium oxide, hafnium oxide, tin oxide, niobium oxide, aluminum oxide, cerium oxide, scandium oxide, yttrium oxide, lanthanum oxide, praseodymium oxide, neodymium oxide, samarium oxide, europium oxide, gadolinium oxide, terbium oxide, dysprosium oxide, holmium oxide, erbium oxide, thulium oxide, ytterbium oxide, lutetium oxide, calcium oxide, gallium oxide, lithium oxide, strontium oxide, tungsten oxide, barium oxide, magnesium oxide, complexes thereof, and complexes of two or more metals such as indium-tin complex oxide. Examples of the oxide fine particles (A) further include complex oxide fine particles between silicon oxide and metal oxides, and metal oxide fine particles coated with silicon oxide.

The oxide fine particles may be used singly, or two or more kinds may be used in combination. The oxide fine particles (A) may be selected appropriately depending on functions to be achieved. For example, TiO₂ fine particles are preferable when high refraction properties are desired, and ZrO₂ fine particles are preferable when both transparency and high refraction properties in the UV region are desired. For UV protection, cerium oxide fine particles or zinc oxide fine particles are preferable. Antimony oxide-doped tin oxide fine particles and indium-tin complex oxide fine particles are preferable to achieve conductivity.

The average primary particle diameter of the oxide fine particles (A) is preferably 0.1 to 100 nm, more preferably 0.1 to 70 nm, and particularly preferably 0.1 to 50 nm. This average primary particle diameter of the oxide fine particles (A) ensures that the obtainable cured products will show excellent optical transparency.

The oxide fine particles (A) may be added as powder without being dispersed in a solvent, or may be added in the form of dispersion in a polar solvent such as isopropyl alcohol or a nonpolar solvent such as toluene. The oxide fine particles (A) prior to addition may be aggregated as secondary particles. In the invention, the powdery form is preferable because in that case, an appropriate organic solvent may be selected in view of solubility of the specific silyl group-containing organic polymer (B) therein. The processes of the invention are particularly effective when the oxide is added as powder.

### [Specific silyl group-containing polymers (B)]

The organic polymer having a specific silyl group (B) (hereinafter, the specific silyl group-containing polymer (B)) has a silyl group in which a hydrolyzable group and/or a hydroxyl group is bonded to the silicon atom (hereinafter, the specific silyl group). The specific silyl group-containing polymer (B) preferably has the specific silyl group at a terminal and/or a side chain of the molecular chain of the organic polymer.

When the specific silyl group-containing polymer (B) and the oxide fine particles (A) are treated by being mixed in an organic solvent in the presence of a basic compound, an acidic compound or a metal chelate compound, the oxide fine particles (A) are highly dispersed in the organic solvent. This great advantage is probably obtained by a mechanism in which the hydrolyzable groups and/or the hydroxyl groups in the specific silyl groups remaining in the polymer (B) are condensed on the surface of the oxide fine particles (A) under catalysis of the basic compound or the like to render the surface of the oxide fine particles (A) hydrophobic whereby the oxide fine particles (A) are finely dispersed in the organic solvent more easily.

In the specific silyl group-containing polymer (B), the content of the specific silyl groups is in the range of 0.1 to 2 wt%, and preferably 0.3 to 1.7 wt% in terms of silicon atoms relative to an organic polymer prior to the introduction of the specific silyl groups. If the content of the specific silyl groups in the specific silyl group-containing polymer (B) is below this range, the specific silyl groups that will remain in the polymer (B) are insufficient and the mixing and dispersing treatment may not provide effects. If the content exceeds the above range, the obtainable composition may be gelled during storage.

The specific silyl group is preferably represented by Formula (3) below:

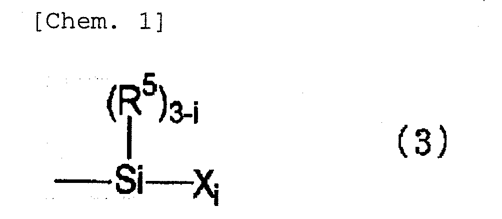

wherein X is a hydroxyl group or a hydrolyzable group such as a halogen atom, an alkoxy group, an acetoxy group, a phenoxy group, a thioalkoxy group or an amino group; R⁵ is a hydrogen atom, a C1-10 alkyl group or a C1-10 aralkyl group; and i is an integer of 1 to 3.

For example, the specific silyl group-containing polymers (B) may be produced by the following method (I) or (II).

(I) A hydrosilane compound having the specific silyl group of Formula (3) (hereinafter, simply the hydrosilane compound (I)) is reacted with a vinyl polymer having a carbon-carbon double bond (hereinafter, the unsaturated vinyl polymer) and is thereby addition reacted to the double bond.

(II) A silane compound represented by Formula (4) below is copolymerized with a vinyl monomer:

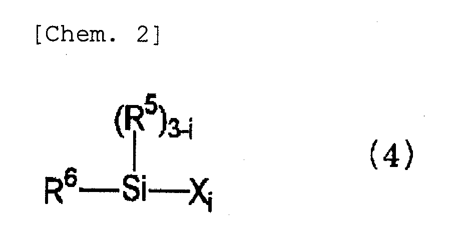

wherein X, R⁵ and i are as defined in Formula (3) and R⁶ is an organic group having a polymerizable double bond (hereinafter, the unsaturated silane compound (II)).

Examples of the hydrosilane compounds (I) used in the method (I) include halogenated silanes such as methyldichlorosilane, trichlorosilane and phenyldichlorosilane; alkoxysilanes such as methyldimethoxysilane, methyldiethoxysilane, phenyldimethoxysilane, trimethoxysilane and triethoxysilane; acyloxysilanes such as methyldiacetoxysilane, phenyldiacetoxysilane and triacetoxysilane; and aminoxysilanes such as methyldiaminoxysilane, triaminoxysilane and dimethyl aminoxysilane. The hydrosilane compounds (I) may be used singly, or two or more kinds may be used in combination.

The unsaturated vinyl polymers used in the method (I) are not particularly limited as long as they are not polymers having the hydroxyl group. For example, they may be prepared by the following method (I-1) or (I-2) or a combination thereof.

(I-1) A vinyl monomer having a functional group (hereinafter, functional group (α)) is (co)polymerized. With the functional group (α) of the resultant (co)polymer, an unsaturated compound that has a functional group (hereinafter, functional group ((β)) capable of reacting with the functional group (α) and a carbon-carbon double bond is reacted to give an unsaturated vinyl polymer having a carbon-carbon double bond in a side chain of the polymer molecular chain.

(I-2) A vinyl monomer is (co)polymerized with use of a radical polymerization initiator having a functional group (α) (e.g., 4,4'-azobis-4-cyanovaleric acid) or using a radical polymerization initiator and a chain transfer agent each having a functional group (α) (e.g., 4,4'-azobis-4-cyanovaleric acid and dithioglycolic acid) to synthesize a (co)polymer having the functional group (α) derived from the radical polymerization initiator or the chain transfer agent at one or both ends of the polymer molecular chain. With the functional group (α) of the (co)polymer, an unsaturated compound that has a functional group (β) and a carbon-carbon double bond is reacted to give an unsaturated vinyl polymer having a carbon-carbon double bond at one or both ends of the polymer molecular chain.

Examples of the reaction between the functional groups (α) and (β) in the methods (I-1) and (I-2) include esterification between a carboxyl group and a hydroxyl group, ring-opening esterification between a carboxylic acid anhydride group and a hydroxyl group, ring-opening esterification between a carboxyl group and an epoxy group, amidation reaction between a carboxyl group and an amino group, ring-opening amidation reaction between a carboxylic acid anhydride group and an amino group, ring-opening addition reaction between an epoxy group and an amino group, urethane-forming reaction between a hydroxyl group and an isocyanate group, and combinations of these reactions.

Examples of the vinyl monomers having a functional group (α) include unsaturated carboxylic acids such as (meth)acrylic acid, crotonic acid, maleic acid, fumaric acid and itaconic acid; unsaturated carboxylic acid anhydrides such as maleic anhydride and itaconic anhydride; hydroxyl group-containing vinyl monomers such as 2-hydroxyethyl (meth)acrylate, 2-hydroxypropyl (meth)acrylate, 3-hydroxypropyl (meth) acrylate, N-methylol (meth) acrylamide and 2-hydroxyethyl vinyl ether; amino group-containing vinyl monomers such as 2-aminoethyl (meth)acrylate, 2-aminopropyl (meth)acrylate, 3-aminopropyl (meth)acrylate and 2-aminoethyl vinyl ether; aminimide group-containing vinyl monomers such as 1,1,1-trimethylamine (meth)acrylimide, 1-methyl-1-ethylamine (meth)acrylimide, 1,1-dimethyl-1-(2-hydroxypropyl)amine (meth)acrylimide, 1,1-dimethyl-1-(2'-phenyl-2'-hydroxyethyl)amine (meth)acrylimide and 1,1-dimethyl-1-(2'-hydroxy-2'-phenoxypropyl)amine (meth)acrylimide; and epoxy group-containing vinyl monomers such as glycidyl (meth)acrylate and allyl glycidyl ether. The vinyl monomers having a functional group (α) may be used singly, or two or more kinds may be used in combination.

Examples of the vinyl monomers copolymerizable with the functional group (α)-containing vinyl monomers include:
aromatic vinyl monomers such as styrene, α-methylstyrene, 4-methylstyrene, 2-methylstyrene, 3-methylstyrene, 4-methoxystyrene, 2-hydroxymethylstyrene, 4-ethylstyrene, 4-ethoxystyrene, 3,4-dimethylstyrene, 3,4-diethylstyrene, 2-chlorostyrene, 3-chlorostyrene, 4-chloro-3-methylstyrene, 4-t-butylstyrene, 2,4-dichlorostyrene, 2,6-dichlorostyrene and 1-vinylnaphthalene;
(meth)acrylate compounds such as methyl (meth)acrylate, ethyl (meth)acrylate, propyl (meth)acrylate, n-butyl (meth)acrylate, i-butyl (meth)acrylate, amyl (meth)acrylate, i-amyl (meth)acrylate, hexyl (meth)acrylate, 2-ethylhexyl (meth)acrylate, n-octyl (meth)acrylate and cyclohexyl methacrylate;
polyfunctional monomers such as divinylbenzene, ethylene glycol di(meth)acrylate, diethylene glycol di(meth)acrylate, triethylene glycol di(meth)acrylate, tetraethylene glycol di(meth)acrylate, propylene glycol di(meth)acrylate, dipropylene glycol di(meth)acrylate, tripropylene glycol di(meth)acrylate, tetrapropylene glycol di(meth)acrylate, butanediol di(meth)acrylate, hexanediol di(meth)acrylate, trimethylolpropane tri(meth)acrylate and pentaerythritol tetra(meth)acrylate;
acid amide compounds such as (meth)acrylamide, N-methylol (meth)acrylamide, N-methoxymethyl (meth)acrylamide, N-butoxymethyl (meth)acrylamide, N,N'-methylene bisacrylamide, diacetone acrylamide, maleic acid amide and maleimide;
vinyl compounds such as vinyl chloride, vinylidene chloride and fatty acid vinyl esters;
aliphatic conjugated dienes such as 1,3-butadiene, 2-methyl-1,3-butadiene, 2,3-dimethyl-1,3-butadiene, 2-neopent-yl-1,3-butadiene, 2-chloro-1,3-butadiene, 2-cyano-1,3-butadiene, isoprene, substituted linear conjugated pentadienes substituted with substituent groups such as alkyl groups, halogen atoms or cyano group, and linear or branched conjugated hexadienes;
vinyl cyanide compounds such as acrylonitrile and methacrylonitrile;
fluorine-containing monomers such as trifluoroethyl (meth)acrylate and pentadecafluorooctyl (meth)acrylate;
piperidine monomers such as 4-(meth)acryloyloxy-2,2,6,6-tetramethylpiperidine, 4-(meth)acryloylamino-2,2,6,6-tetramethylpiperidine and 4-(meth)acryloyloxy-1,2,2,6,6-pentamethylpiperidine;
UV-absorbing monomers such as 2-(2'-hydroxy-5'-methacryloxyethylphenyl)-2H-benzotriazole, 2-(2'-hydroxy-3'-t-butyl-5'-methacryloxyethylphenyl)-2H-benzotriazole, 2-hydroxy-4-(methacryloyloxyethoxy)benzophenone and 2-hydroxy-4-(acryloyloxyethoxy)benzophenone; and
dicaprolactone. These monomers may be used singly, or two or more kinds may be used in combination.

Examples of the unsaturated compounds having a functional group (β) and a carbon-carbon double bond include the vinyl monomers having a functional group (α) as described above, and isocyanate group-containing unsaturated compounds obtained by equimolar reaction of the aforementioned hydroxyl group-containing vinyl monomers and diisocyanate compounds.

Examples of the unsaturated silane compounds (II) used in the method (II) include:
CH₂=CHSi(CH₃)(OCH₃)₂, CH₂=CHSi(OCH₃)₃,
CH₂=CHSi(CH₃)Cl₂, CH₂=CHSiCl₃,
CH₂=CHCOO(CH₂)₂Si(CH₃)(OCH₃)₂,
CH₂=CHCOO(CH₂)₂Si(OCH₃)₃,
CH₂=CHCOO(CH₂)₃Si(CH₃)(OCH₃)₂,
CH₂=CHCOO(CH₂)₃Si(OCH₃)₃,
CH₂=CHCOO(CH₂)₂Si(CH₃)Cl₂,
CH₂=CHCOO(CH₂)₂SiCl₃,
CH₂=CHCOO(CH₂)₃Si(CH₃)Cl₂,
CH₂=CHCOO(CH₂)₃SiCl₃,
CH₂=C(CH₃)COO(CH₂)₂Si(CH₃)(OCH₃)₂,
CH₂=C(CH₃)COO(CH₂)₂Si(OCH₃)₃,
CH₂=C(CH₃)COO(CH₂)₃Si(CH₃)(OCH₃)₂,
CH₂=C(CH₃)COO(CH₂)₃Si(OCH₃)₃,
CH₂=C(CH₃)COO(CH₂)₂Si(CH₃)Cl₂,
CH₂=C(CH₃)COO(CH₂)₂SiCl₃,
CH₂=C(CH₃)COO(CH₂)₃Si(CH₃)Cl₂,
CH₂=C(CH₃)COO(CH₂)₃SiCl₃,

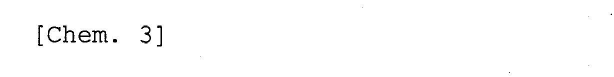

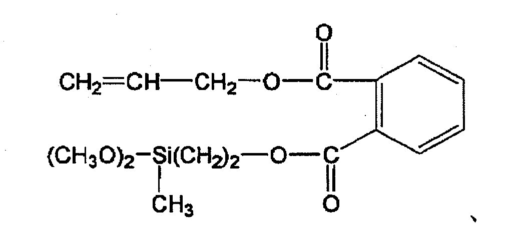

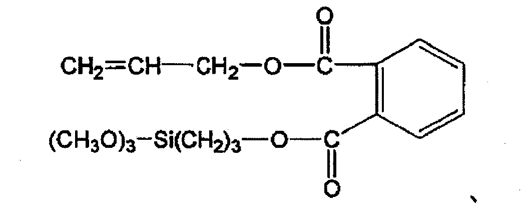

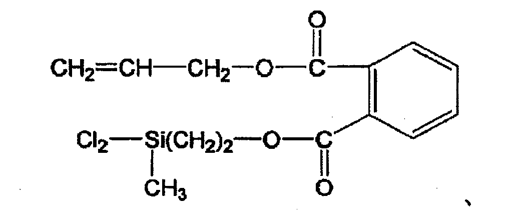

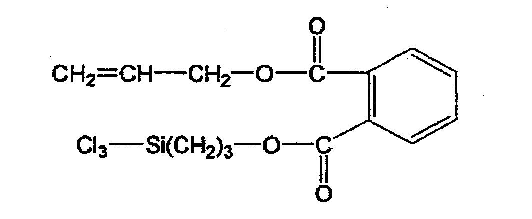

These compounds may be used singly, or two or more kinds may be used in combination.

Examples of the vinyl monomers to be copolymerized with the unsaturated silane compounds include the functional group (α) -containing vinyl monomers and other vinyl monomers described in the method (I-1).

In the production of the specific silyl group-containing polymers (B), the monomers may be added at once and polymerized together; part of the monomers may be polymerized first, and the remaining may be continuously or intermittently added and polymerized; or the monomers may be continuously added from the start of the polymerization. These polymerization modes may be used in combination.

Solution polymerization is preferable in the invention. Solvents used in the solution polymerization are not particularly limited as long as the specific silyl group-containing polymer (B) is produced. Exemplary solvents include alcohols, aromatic hydrocarbons, ethers, ketones and esters. The alcohols include methanol, ethanol, n-propyl alcohol, i-propyl alcohol, n-butyl alcohol, sec-butyl alcohol, t-butyl alcohol, n-hexyl alcohol, n-octyl alcohol, ethylene glycol, diethylene glycol, triethylene glycol, ethylene glycol monobutyl ether, ethylene glycol monoethyl ether acetate, diethylene glycol monoethyl ether, propylene glycol monomethyl ether, propylene monomethyl ether acetate and diacetone alcohol. The aromatic hydrocarbons include benzene, toluene and xylene. The ethers include tetrahydrofuran and dioxane. The ketones include acetone, methyl ethyl ketone, methyl isobutyl ketone and diisobutyl ketone. The esters include ethyl acetate, propyl acetate, butyl acetate, propylene carbonate, methyl lactate, ethyl lactate, n-propyl lactate, isopropyl lactate, methyl 3-ethoxypropionate and ethyl 3-ethoxypropionate. These organic solvents may be used singly, or two or more kinds may be used in combination.

The polymerization may involve known polymerization initiators, molecular weight modifiers, chelating agents and inorganic electrolytes.

In the invention, the specific silyl group-containing polymers (B) may be obtained as described above. Alternatively, other polymers such as epoxy resins and polyester resins that have the specific silyl group may be used. Such specific silyl group-containing epoxy resins may be produced by reacting the epoxy group in epoxy resins such as bisphenol A epoxy resins, bisphenol F epoxy resins, hydrogenated bisphenol A epoxy resins, aliphatic polyglycidyl ethers and aliphatic polyglycidyl esters, with aminosilanes, vinylsilanes, carboxysilanes or glycidylsilanes having the specific silyl group. The specific silyl group-containing polyester resins may be prepared by reacting the carboxyl group or the hydroxyl group in polyester resins with aminosilanes, carboxysilanes or glycidylsilanes having the specific silyl group.

The specific silyl group-containing polymers (B) preferably have a polystyrene equivalent Mw by GPC of 2,000 to 100,000, and more preferably 3,000 to 50,000.

The specific silyl group-containing polymers (B) may be used singly, or two or more kinds may be used in combination.

### [Oxide fine particle-containing resin compositions and uses thereof]

The oxide fine particle-containing resin compositions of the invention may be obtained by mixing and dispersing the oxide fine particles (A) and the specific silyl group-containing polymer (B) in an organic solvent in the presence of a basic compound, an acidic compound or a metal chelate compound, without using phosphoric acids or the like having organic groups of 6 or more carbon atoms or compounds having oxyalkylene groups.

### (Organic solvents)

The organic solvents include the alcohols, aromatic hydrocarbons, ethers, ketones and esters described above for the production of the specific silyl group-containing polymer (B). The organic solvents may be used singly, or two or more kinds may be used in combination. The organic solvent used in the production of the specific silyl group-containing polymer (B) may be continuously used herein. Alternatively, the organic solvent used in the production of the specific silyl group-containing polymer (B) may be removed and a new organic solvent may be added.

Of the organic solvents, those other than the alcohols are preferable because the obtainable oxide fine particle-containing resin composition shows good dispersion stability. Examples of such preferred solvents include methyl ethyl ketone, methyl isobutyl ketone, diisobutyl ketone, toluene, xylene, ethyl acetate, butyl acetate and mixtures thereof. The organic solvents are preferably dehydrated beforehand and used in a dry state.

The amount of the organic solvents is not particularly limited as long as the oxide fine particles (A) are uniformly dispersed. Preferably, the amount is such that the obtainable oxide fine particle-containing resin composition has a solid concentration of 5 to 80 wt%, more preferably 7 to 70 wt%, and particularly preferably 10 to 60 wt%.

### (Basic compounds)

Examples of the basic compounds include ammonia (including aqueous ammonia solution) ; organic amine compounds; alkali metal hydroxides and alkaline earth metal hydroxides such as sodium hydroxide and potassium hydroxide; and alkali metal alkoxides such as sodium methoxide and sodium ethoxide. Of these, ammonia and organic amine compounds are preferred.

Examples of the organic amines include alkylamines, alkoxyamines, alkanolamines and arylamines.

The alkylamines include alkylamines having 1 to 4 carbon atoms in each alkyl group such as methylamine, ethylamine, propylamine, butylamine, hexylamine, octylamine, N,N-dimethylamine, N,N-diethylamine, N,N-dipropylamine, N,N-dibutylamine, trimethylamine, triethylamine, tripropylamine and tributylamine.

The alkoxyamines include alkoxyamines having 1 to 4 carbon atoms in each alkoxy group such as methoxymethylamine, methoxyethylamine, methoxypropylamine, methoxybutylamine, ethoxymethylamine, ethoxyethylamine, ethoxypropylamine, ethoxybutylamine, propoxymethylamine, propoxyethylamine, propoxypropylamine, propoxybutylamine, butoxymethylamine, butoxyethylamine, butoxypropylamine and butoxybutylamine.

The alkanolamines include alkanolamines having 1 to 4 carbon atoms in each alkyl group such as methanolamine, ethanolamine, propanolamine, butanolamine, N-methylmethanolamine, N-ethylmethanolamine, N-propylmethanolamine, N-butylmethanolamine, N-methylethanolamine, N-ethylethanolamine, N-propylethanolamine, N-butylethanolamine, N-methylpropanolamine, N-ethylpropanolamine, N-propylpropanolamine, N-butylpropanolamine, N-methylbutanolamine, N-ethylbutanolamine, N-propylbutanolamine, N-butylbutanolamine, N,N-dimethylmethanolamine, N,N-diethylmethanolamine, N,N-dipropylmethanolamine, N,N-dibutylmethanolamine, N,N-dimethylethanolamine, N,N-diethylethanolamine, N,N-dipropylethanolamine, N,N-dibutylethanolamine, N,N-dimethylpropanolamine, N,N-diethylpropanolamine, N,N-dipropylpropanolamine, N,N-dibutylpropanolamine, N,N-dimethylbutanolamine, N,N-diethylbutanolamine, N,N-dipropylbutanolamine, N,N-dibutylbutanolamine, N-methyldimethanolamine, N-ethyldimethanolamine, N-propyldimethanolamine, N-butyldimethanolamine, N-methyldiethanolamine, N-ethyldiethanolamine, N-propyldiethanolamine, N-butyldiethanolamine, N-methyldipropanolamine, N-ethyldipropanolamine, N-propyldipropanolamine, N-butyldipropanolamine, N-methyldibutanolamine, N-ethyldibutanolamine, N-propyldibutanolamine, N-butyldibutanolamine, N-(aminomethyl)methanolamine, N-(aminomethyl)ethanolamine, N-(aminomethyl)propanolamine, N-(aminomethyl)butanolamine, N-(aminoethyl)methanolamine, N-(aminoethyl)ethanolamine, N-(aminoethyl)propanolamine, N-(aminoethyl)butanolamine, N-(aminopropyl)methanolamine, N-(aminopropyl)ethanolamine, N-(aminopropyl)propanolamine, N-(aminopropyl)butanolamine, N-(aminobutyl)methanolamine, N-(aminobutyl)ethanolamine, N-(aminobutyl)propanolamine and N-(aminobutyl)butanolamine.

The arylamines include aniline and N-methylaniline.

Examples of the organic amines further include tetraalkylammonium hydroxides such as tetramethylammonium hydroxide, tetraethylammonium hydroxide, tetrapropylammonium hydroxide and tetrabutylammonium hydroxide; tetraalkylethylenediamines such as tetramethylethylenediamine, tetraethylethylenediamine, tetrapropylethylenediamine and tetrabutylethylenediamine; alkylaminoalkylamines such as methylaminomethylamine, methylaminoethylamine, methylaminopropylamine, methylaminobutylamine, ethylaminomethylamine, ethylaminoethylamine, ethylaminopropylamine, ethylaminobutylamine, propylaminomethylamine, propylaminoethylamine, propylaminopropylamine, propylaminobutylamine, butylaminomethylamine, butylaminoethylamine, butylaminopropylamine and butylaminobutylamine; polyamines such as ethylenediamine, hexamethylenediamine, diethylenetriamine, triethylenetetramine, tetraethylenepentamine, m-phenylenediamine and p-phenylenediamine; pyridine, pyrrole, piperadine, pyrrolidine, piperidine, picoline, morpholine, methylmorpholine, diazabicyclooctane, diazabicyclononane and diazabicycloundecene.

These basic compounds may be used singly, or two or more kinds may be used in combination. Of these, triethylamine, tetramethylammonium hydroxide and pyridine are particularly preferable.

### (Acidic compounds)

Examples of the acidic compounds include organic acids and inorganic acids. The organic acids include acetic acid, propionic acid, butanoic acid, pentanoic acid, hexanoic acid, heptanoic acid, octanoic acid, nonanoic acid, decanoic acid, oxalic acid, maleic acid, maleic anhydride, methylmalonic acid, adipic acid, sebacic acid, gallic acid, butyric acid, mellitic acid, arachidonic acid, shikimic acid, 2-ethylhexanoic acid, oleic acid, stearic acid, linolic acid, linoleic acid, salicylic acid, benzoic acid, p-aminobenzoic acid, p-toluenesulfonic acid, benzenesulfonic acid, monochloroacetic acid, dichloroacetic acid, trichloroacetic acid, trifluoroacetic acid, formic acid, malonic acid, methanesulfonic acid, phthalic acid, fumaric acid, citric acid and tartaric acid. The inorganic acids include hydrochloric acid, nitric acid, sulfuric acid, hydrofluoric acid and phosphoric acid.

The acidic compounds may be used singly, or two or more kinds may be used in combination. Of these, maleic acid, maleic anhydride, methanesulfonic acid and acetic acid are particularly preferable.

### (Metal chelate compounds)

Examples of the metal chelate compounds include organometallic compounds and/or partial hydrolyzates thereof (hereinafter, the organometallic compounds and/or partial hydrolyzates thereof are collectively referred to as the organometallic compounds).

The organometallic compounds include:
compounds represented by Formula (a) below:

   M(OR⁷)ᵣ(R⁸COCHCOR⁹)ₛ (a)

   wherein M is at least one metal selected from the group consisting of zirconium, titanium and aluminum; R⁷ and R⁸ are each independently a C1-6 monovalent hydrocarbon group such as methyl group, ethyl group, n-propyl group, i-propyl group, n-butyl group, sec-butyl group, t-butyl group, n-pentyl group, n-hexyl group, cyclohexyl group or phenyl group; R⁹ is a C1-6 monovalent hydrocarbon group as described above, or a C1-16 ) alkoxy group such as methoxy group, ethoxy group, n-propoxy group, i-propoxy group, n-butoxy group, sec-butoxy group, t-butoxy group, lauryloxy group or stearyloxy group; and r and s are each independently an integer of 0 to 4 and (r + s) = (valence of M);
   tetravalent organotin compounds wherein one to two alkyl groups of 1 to 10 carbon atoms are bonded to each tin atom (hereinafter, the organotin compounds); and
   partial hydrolyzates of these compounds.

Examples of the organometallic compounds further include tetraalkoxytitaniums such as tetramethoxytitanium, tetraethoxytitanium, tetra-i-propoxytitanium and tetra-n-butoxytitanium; titanium alcoholates of trialkoxysilanes and condensates thereof such as titanium alcoholates of trialkoxysilanes such as methyltrimethoxysilane, ethyltriethoxysilane, n-propyltrimethoxysilane, i-propyltriethoxysilane, n-hexyltrimethoxysilane, cyclohexyltriethoxysilane, phenyltrimethoxysilane, 3-chloropropyltriethoxysilane, 3-aminopropyltrimethoxysilane, 3-aminopropyltriethoxysilane, 3-(2-aminoethyl)-aminopropyltrimethoxysilane, 3-(2-aminoethyl)-aminopropyltriethoxysilane, 3-(2-aminoethyl)-aminopropylmethyldimethoxysilane, 3-anilinopropyltrimethoxysilane, 3-mercaptopropyltriethoxysilane, 3-isocyanatopropyltrimethoxysilane, 3-glycidoxypropyltriethoxysilane and 3-ureidopropyltrimethoxysilane; and titanium alcoholates of dialkoxysilanes and condensates thereof such as titanium alcoholates of dialkoxysilanes such as dimethyldiethoxysilane, diethyldiethoxysilane, di-n-propyldimethoxysilane, di-i-propyldiethoxysilane, di-n-pentyldimethoxysilane, di-n-octyldiethoxysilane, di-n-cyclohexyldimethoxysilane and diphenyldimethoxysilane.

Examples of the organometallic compounds (a) include organozirconium compounds such as tetra-n-butoxyzirconium, tri-n-butoxy ethyl acetoacetate zirconium, di-n-butoxy bis(ethyl acetoacetate)zirconium, n-butoxy tris(ethyl acetoacetate)zirconium, tetrakis(n-propyl acetoacetate)zirconium, tetrakis(acetyl acetoacetate)zirconium and tetrakis(ethyl acetoacetate)zirconium;
organotitanium compounds such as tetra-i-propoxytitanium, di-i-propoxy bis(ethyl acetoacetate)titanium, di-i-propoxy bis(acetyl acetate)titanium and di-i-propoxy bis(acetylacetone)titanium; and
organoaluminum compounds such as tri-i-propoxyaluminum, di-i-propoxy ethyl acetoacetate aluminum, di-i-propoxy acetyl acetonate aluminum, i-propoxy bis (ethyl acetoacetate) aluminum, i-propoxy bis(acetyl acetonate)aluminum, tris(ethyl acetoacetate)aluminum, tris(acetyl acetonate)aluminum and monoacetyl acetonate bis(ethyl acetoacetate)aluminum.

Examples of the organotin compounds include:
carboxylic acid organotin compounds such as:

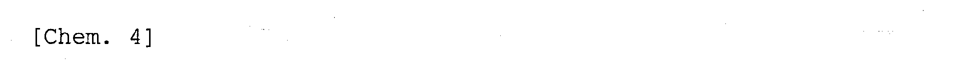

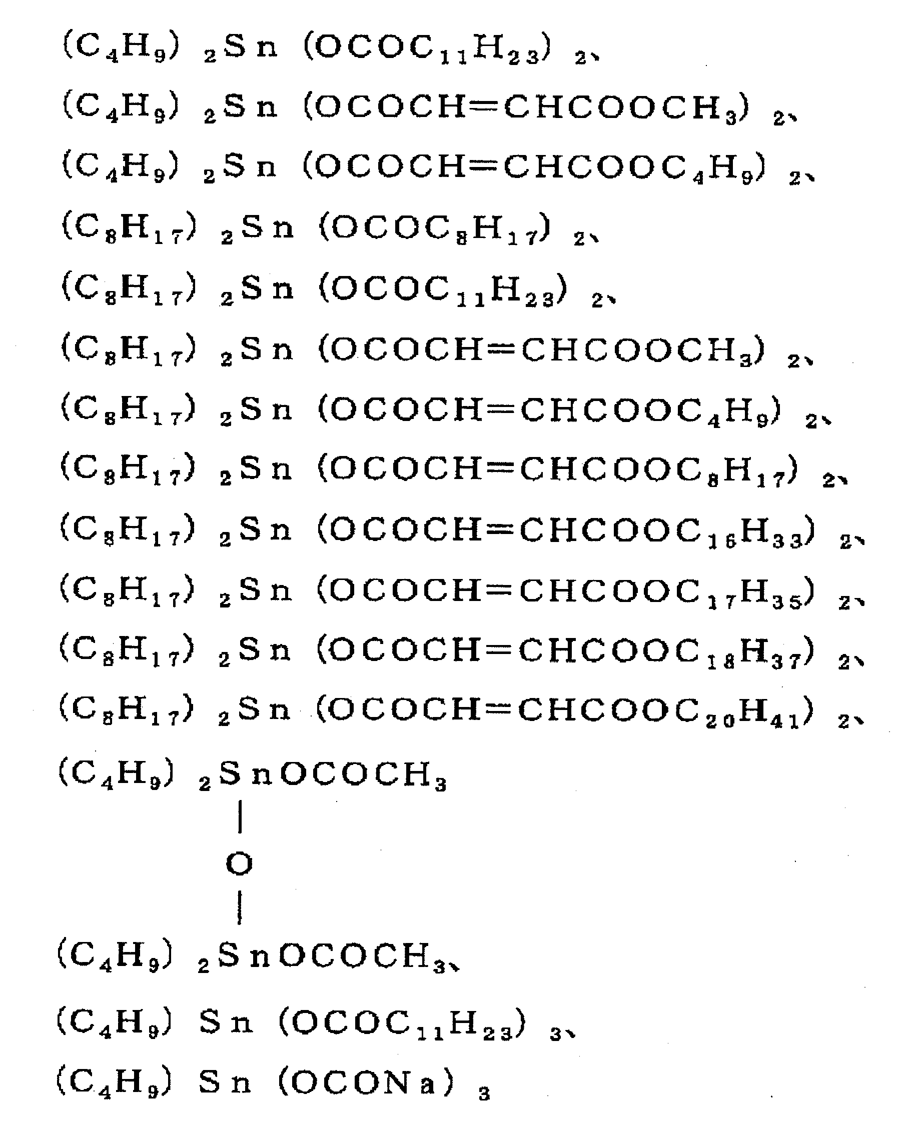

mercaptide organotin compounds such as:

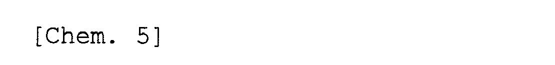

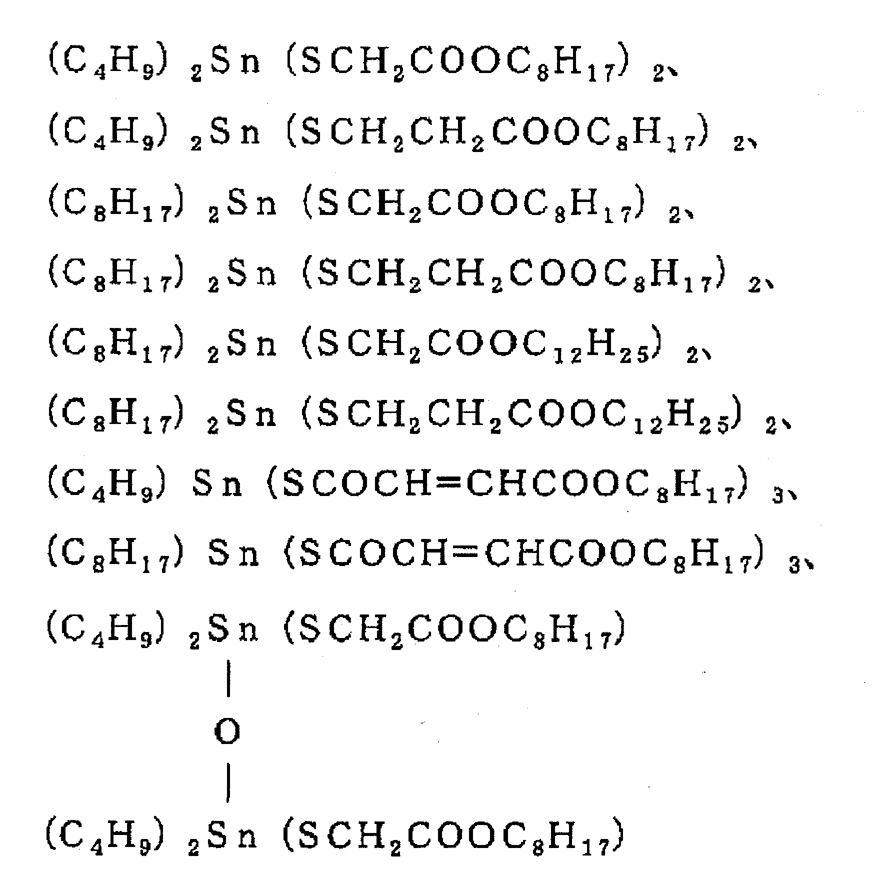

sulfide organotin compounds such as:

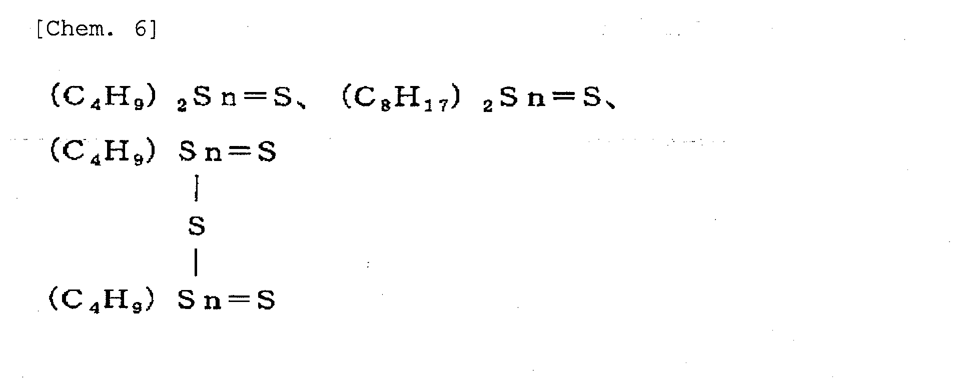

chloride organotin compounds such as:

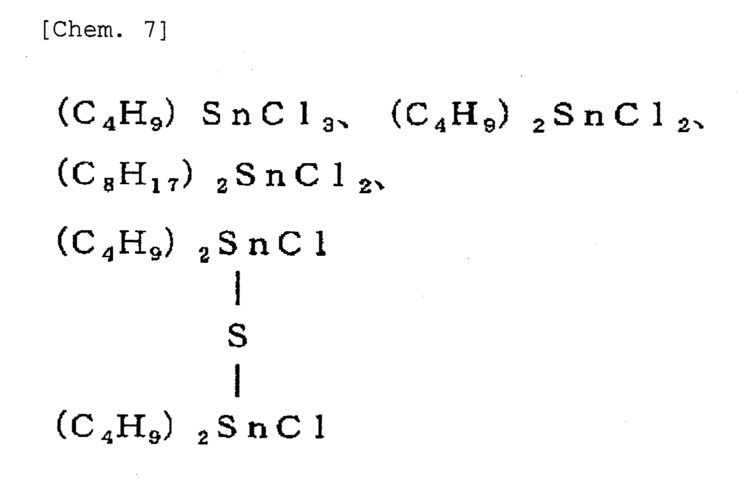

and organotin oxides such as (C₄H₉)₂SnO and (C₈H₁₇)₂SnO and reaction products between the organotin oxides and ester compounds such as silicate, dimethyl maleate, diethyl maleate and dioctyl phthalate.

These metal chelate compounds may be used singly, or two or more kinds may be used in combination. Of these, tri-n-butoXy ethyl acetoacetate zirconium, di-i-propoxy bis(acetyl acetonate)titanium, di-i-propoxy ethyl acetoacetate aluminum, tris(ethyl acetoacetate)aluminum and partial hydrolyzates thereof are preferable.

Of the basic compounds, acidic compounds and metal chelate compounds, the basic compounds and acidic compounds are preferable, the basic compounds are more preferable, the organic amine compounds are still more preferable, and triethylamine, tetramethylammonium hydroxide and pyridine are particularly preferable.

The oxide fine particle-containing resin compositions of the invention desirably contain the basic compounds, acidic compounds or metal chelate compounds in amounts of 0.001 to 20 parts by weight, preferably 0.005 to 10 parts by weight, more preferably 0.01 to 5 parts by weight, more preferably 0.01 to 1 parts by weight, and particularly preferably 0.01 to 0.5 parts by weight based on 100 parts by weight of the oxide fine particles (A). This amount of the basic compounds, acidic compounds or metal chelate compounds ensures that the obtainable oxide fine particle-containing resin composition will show excellent dispersion stability.

### (Processes for producing oxide fine particle-containing resin compositions)

The oxide fine particle-containing resin compositions of the invention may be produced by sufficiently mixing the oxide fine particles (A) and the specific silyl group-containing polymer (B) in the organic solvent in the presence of the basic compound, acidic compound or metal chelate compound, thereby dispersing the oxide fine particles (A) in the organic solvent. Here, it is preferable to use known dispersing devices such as ball mills, sand mills (bead mills, high shear bead mill), homogenizers, ultrasonic homogenizers, nanomizers, propeller mixers, high shear mixers and paint shakers. In particular, fine particle processing ball mills and sand mills (bead mills, high shear bead mills) capable of high dispersing performance are preferably used. Mixing the oxide fine particles (A) and the specific silyl group-containing polymer (B) in the presence of the basic compound, acidic compound or metal chelate compound probably causes the condensation reaction of the polymer (B) on the surface of the oxide fine particles (A) under catalysis of the basic compound, acidic compound or metal chelate compound to render the surface of the oxide fine particles (A) hydrophobic whereby the oxide fine particles are finely dispersed in the organic solvent more easily.

The oxide fine particle-containing resin compositions preferably contain the specific silyl group-containing polymer (B) in an amount in terms of solid of 1 to 1000 parts by weight, more preferably 5 to 900 parts by weight, and particularly preferably 10 to 800 parts by weight based on 100 parts by weight of the oxide fine particles (A).

In the oxide fine particle-containing resin compositions, the oxide fine particles (A) are highly dispersed with a volume average diameter of the dispersed particles of not more than 300 nm, and preferably not more than 200 nm.

The hydrolyzable groups and/or the hydroxyl groups in the specific silyl group-containing polymer (B) allow the oxide fine particles (A) to be highly dispersed in the composition without use of phosphoric acids or the like having organic groups of 6 or more carbon atoms or compounds having oxyalkylene groups. Accordingly, the compositions give cured products having excellent transparency and yellowing resistance.

The oxide fine particle-containing resin compositions may contain fluorescent materials, and cured products from such compositions may be used as LED encapsulating materials.

### EXAMPLES

The present invention will be described in detail hereinbelow by presenting examples without limiting the scope of the invention. In Examples and Comparative Examples, parts and % refer to parts by weight and % by weight unless otherwise mentioned. Measurements in Examples and Comparative Examples were carried out as follows.

### [GPC]

The weight average molecular weight of specific silyl group-containing polymers was measured by GPC relative to polystyrene standards under the following conditions. Chromatograph: HLC-8120C (manufactured by TOSOH CORPORATION) Colum: TSK-gel Multipore H_{XL}-M (manufactured by TOSOH CORPORATION)
Eluting solution: THF, flow rate: 0.5 ml/min, loading amount: 5.0%, 100 µL

### [Dispersibility]

The composition obtained was visually observed. When the composition had no precipitation of the fine particles, the volume average diameter of the dispersed particles was determined with Microtrac ultrafine particle size distribution analyzer (UPA 150 manufactured by NIKKISO CO., LTD.) and the dispersibility was evaluated based on the following criteria.
A: No separation or precipitation. Volume average diameter ≤ 200 nm.
B: No separation or precipitation. 200 nm < Volume average diameter ≤ 300 nm.
C: No separation or precipitation. 300 nm < Volume average diameter.
D: Separation or precipitation.

### [Film transparency]

To 100 parts of the composition, 15 parts of an i-butyl alcohol solution of dioctyltin dimaleate (solid concentration: approximately 10%) was added. These were stirred sufficiently to give a solution. The solution was then applied on a quartz glass plate such that the dry thickness would be 10 µm. The coating was dried and cured at 80°C for 1 hour, and a cured product 10 µm in thickness was formed on the quartz glass plate. The spectral transmittance at wavelengths of 500 to 700 nm of the cured product was measured with a UV visible spectrophotometer, and the transparency was evaluated based on the following criteria.
A: Transmittance of more than 90%.
B: Transmittance of 70 to 90%.
C: Transmittance of less than 70%.

### [Yellowness]

To 100 parts of the composition, 15 parts of an i-butyl alcohol solution of dioctyltin dimaleate (solid concentration: approximately 10%) was added. These were stirred sufficiently to give a solution. The solution was then applied on a quartz glass plate such that the dry thickness would be 10 µm. The coating was dried and cured at 80 °C for 1 hour, and a cured product 10 µm in thickness was formed on the quartz glass plate. The spectral transmittance at wavelength of 450 nm of the cured product was measured with a UV visible spectrophotometer, and the yellowness was evaluated based on the following criteria.
A: Transmittance of more than 90%.
B: Transmittance of 70 to 90%.
C: Transmittance of less than 70%.

### (Appearance)

A: No cracks, no film separation, and no changes after the irradiation test.
B: No film separation but local cracks.
C: No film separation but cracks all over the film.
D: Film separation.

### (Adhesion)

AA: Application and peeling of a tape from the film did not cause any separation of the film.
A: Application and peeling of a tape from the film caused separation at less than 5% of the film.
B: Application and peeling of a tape from the film caused separation at 5 to 50% of the film.
C: Application and peeling of a tape from the film caused separation at more than 50% of the film.

### [Preparation of specific silyl group-containing polymers (B)] <Preparation Example 1>

A reactor equipped with a reflux condenser and a stirrer was charged with 55 parts of methyl methacrylate, 5 parts of 2-ethylhexyl acrylate, 5 parts of cyclohexyl methacrylate, 10 parts of γ-methacryloxypropyltrimethoxysilane, 20 parts of glycidyl methacrylate, 5 parts of 4-(meth)acryloyloxy-2,2,6,6-tetramethylpiperidine, 75 parts of i-butyl alcohol, 50 parts of methyl ethyl ketone and 25 parts of methanol. These materials were mixed and heated to 80°C with stirring. To the mixture, a solution of 3 parts of azobisisovaleronitrile in 8 parts of xylene was added dropwise over a period of 30 minutes, and reaction was performed at 80°C for 5 hours. The reaction liquid was cooled, and 36 parts of methyl ethyl ketone was added. The resultant solution contained a specific silyl group-containing polymer (B-1) that had a solid concentration of 35%, a GPC Mw of 12,000 and a silicon content in the solid of 1.1 wt%.

### <Preparation Example 2>

The procedures of Preparation Example 1 were repeated except that 20 parts of 2-hydroxyethyl methacrylate was used in place of glycidyl methacrylate, resulting in a solution that contained a specific silyl group-containing polymer (B-2) having a solid concentration of 35%, a Mw of 13, 000 and a silicon content in the solid of 1.1 wt%.

### <Preparation Example 3>

A reactor equipped with a reflux condenser and a stirrer was charged with 30 parts of methyl methacrylate, 10 parts of n-butyl acrylate, 10 parts of γ-methacryloxypropyltrimethoxysilane, 20 parts of glycidyl methacrylate, 10 parts of 4-(meth)acryloyloxy-2,2,6,6-tetramethylpiperidine, 20 parts of 2-(2'-hydroxy-5'-methacryloxyethylphenyl)-2H-benzotriazole, 75 parts of i-butyl alcohol, 50 parts of methyl ethyl ketone and 25 parts of methanol. These materials were mixed and heated to 80°C with stirring. To the mixture, a solution of 4 parts of azobisisovaleronitrile in 10 parts of xylene was added dropwise over a period of 30 minutes, and reaction was performed at 80°C for 5 hours. The reaction liquid was cooled, and 36 parts of methyl ethyl ketone was added. The resultant solution contained a specific silyl group-containing polymer (B-3) that had a solid concentration of 35%, a GPC Mw of 10, 000 and a silicon content in the solid of 1.1 wt%.

### <Preparation Example 4>

A reactor equipped with a reflux condenser and a stirrer was charged with 75 parts of methyl methacrylate, 5 parts of 2-ethylhexyl acrylate, 5 parts of cyclohexyl methacrylate, 10 parts of γ-methacryloxypropyltrimethoxysilane, 5 parts of 4-(meth)acryloyloxy-2,2,6,6-tetramethylpiperidine, 75 parts of i-butyl alcohol, 50 parts of methyl ethyl ketone and 25 parts of methanol. These materials were mixed and heated to 80°C with stirring. To the mixture, a solution of 3 parts of azobisisovaleronitrile in 8 parts of xylene was added dropwise over a period of 30 minutes, and reaction was performed at 80°C for 5 hours. The reaction liquid was cooled, and 36 parts of methyl ethyl ketone was added. The resultant solution contained a specific silyl group-containing polymer (B-4) that had a solid concentration of 35%, a GPC Mw of 8,000 and a silicon content in the solid of 1.1 wt%.

### Example 1

A container was charged with 100 parts by weight of rutile titanium oxide fine particles (average primary particle diameter: 30 nm), 286 parts by weight of the solution containing the specific silyl group-containing polymer (B-1) (100 parts by weight in terms of solid), 0.2 parts by weight of triethylamine and 614 parts by weight of methyl isobutyl ketone. To the mixture, 2000 parts by weight of 0.1 mm diameter zirconia beads were added. The materials were treated with a bead mill at 1500 rpm for 1 hour and thereby fine particles were dispersed. An oxide fine particle-containing polysiloxane composition (1) having a solid concentration of 20 wt% was thus obtained. Properties of the composition were evaluated. The results are set forth in Table 1.

### Example 2

The procedures of Example 1 were repeated except that 100 parts by weight of zinc oxide fine particles (average primary particle diameter: 20 nm) were used in place of the rutile titanium oxide fine particles, resulting in a metal oxide fine particle-containing polysiloxane composition (2) having a solid concentration of 20 wt%. Properties of the composition were evaluated. The results are set forth in Table 1.

### Example 3

The procedures of Example 1 were repeated except that 100 parts by weight of zirconium oxide fine particles (average primary particle diameter: 20 nm) were used in place of the rutile titanium oxide fine particles, resulting in a metal oxide fine particle-containing polysiloxane composition (3) having a solid concentration of 20 wt%. Properties of the composition were evaluated. The results are set forth in Table 1.

### Example 4

The procedures of Example 2 were repeated except that 0.2 parts by weight of methanesulfonic acid was used in place of triethylamine, resulting in a metal oxide fine particle-containing polysiloxane composition (4) having a solid concentration of 20 wt%. Properties of the composition were evaluated. The results are set forth in Table 1.

### Example 5

The procedures of Example 2 were repeated except that 286 parts by weight of the solution containing the specific silyl group-containing polymer (B-2) (100 parts by weight in terms of solid) was used in place of the solution of the specific silyl group-containing polymer (B-1), resulting in a metal oxide fine particle-containing polysiloxane composition (5) having a solid concentration of 20 wt%. Properties of the composition were evaluated. The results are set forth in Table 1.

### Example 6

The procedures of Example 2 were repeated except that 286 parts by weight of the solution containing the specific silyl group-containing polymer (B-3) (100 parts by weight in terms of solid) was used in place of the solution of the specific silyl group-containing polymer (B-1), resulting in a metal oxide fine particle-containing polysiloxane composition (6) having a solid concentration of 20 wt%. Properties of the composition were evaluated. The results are set forth in Table 1.

### Example 7

The procedures of Example 2 were repeated except that 286 parts by weight of the solution containing the specific silyl group-containing polymer (B-4) (100 parts by weight in terms of solid) was used in place of the solution of the specific silyl group-containing polymer (B-1), resulting in a metal oxide fine particle-containing polysiloxane composition (7) having a solid concentration of 20 wt%. Properties of the composition were evaluated. The results are set forth in Table 1.

### [Comparative Example 1]

A container was charged with 100 parts by weight of rutile titanium oxide fine particles (average primary particle diameter: 30 nm), 286 parts by weight of the solution containing the specific silyl group-containing polymer (B-1) (100 parts by weight in terms of solid), 9 parts by weight of a polyoxyethylene alkyl phosphate (PLADD ED151 manufactured by Kusumoto Chemicals, Ltd.), 5 parts by weight of acetyl acetone and 614 parts by weight of methyl isobutyl ketone. To the mixture, 2000 parts by weight of 0.1 mm diameter zirconia beads were added. The materials were treated with a bead mill at 1500 rpm for 1 hour and thereby fine particles were dispersed. An oxide fine particle-containing polysiloxane composition (C1) having a solid concentration of 20 wt% was thus obtained. Properties of the dispersion were evaluated. The results are set forth in Table 1.

### [Comparative Example 2]

The procedures of Example 1 were repeated except that triethylamine was not used. However, the rutile titanium oxide fine particles could not be dispersed stably in methyl isobutyl ketone and were precipitated.

### [Comparative Example 3]

The procedures of Example 1 were repeated except that the solution of the specific silyl group-containing polymer (B-1) was not used. However, the rutile titanium oxide fine particles could not be dispersed stably in methyl isobutyl ketone and were precipitated.

### [Comparative Example 4]

An aqueous dispersion contained anatase titanium oxide fine particles dispersed in water (STS-01 manufactured by ISHIHARA SANGYO KAISHA, LTD., TiO₂ concentration: 30 wt%, volume average particle diameter of dispersed titanium oxide fine particles: 60 nm, organic dispersing agent: 0 wt%). 300 Parts by weight of this aqueous dispersion was added to a container. Further, 286 parts by weight of the solution containing the specific silyl group-containing polymer (B-1) (100 parts by weight in terms of solid) and 414 parts by weight of methyl isobutyl ketone were added. To the mixture, 2000 parts by weight of 0.1 mm diameter zirconia beads were added. The materials were treated with a bead mill at 1500 rpm for 1 hour and thereby fine particles were dispersed. However, the titanium oxide fine particles were precipitated.

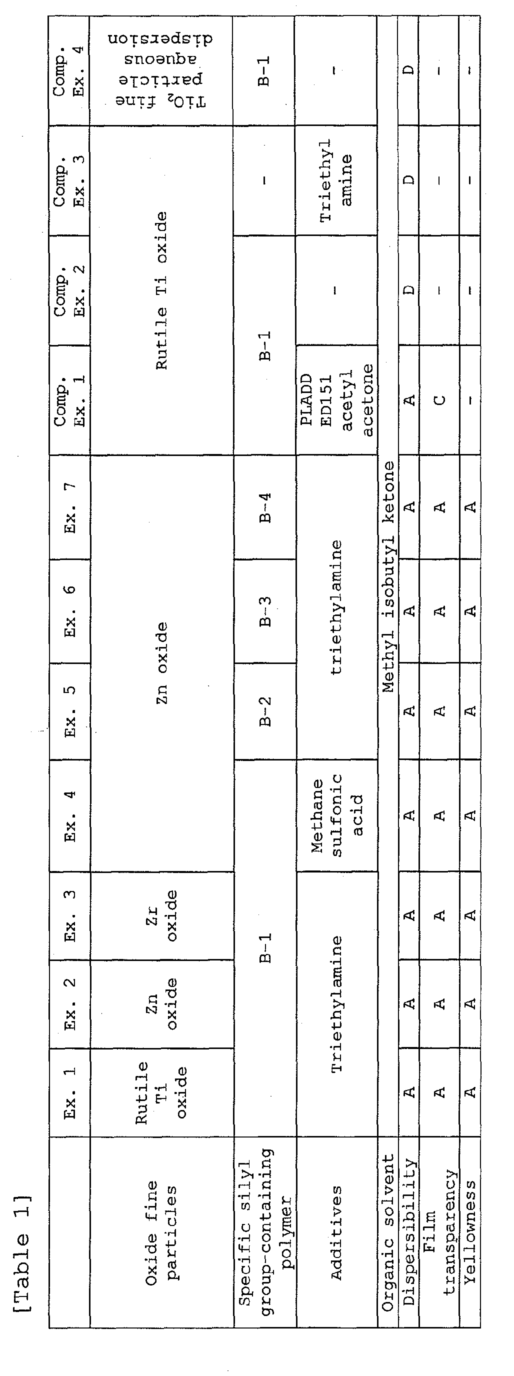

## Claims

1. An oxide fine particle-containing resin composition produced by mixing:
(A) silicon oxide fine particles and/or metal oxide fine particles; and
(B) an organic polymer having a silyl group in which a hydrolyzable group and/or a hydroxyl group is bonded to the silicon atom;
in an organic solvent in the presence of a basic compound, an acidic compound or a metal chelate compound, thereby dispersing the oxide fine particles (A) in the organic solvent.

2. The oxide fine particle-containing resin composition according to claim 1, wherein the oxide fine particles (A) and the silyl group-containing organic polymer (B) are mixed in the presence of a basic compound.

3. The oxide fine particle-containing resin composition according to claim 1 or 2, wherein the oxide fine particles (A) and the silyl group-containing organic polymer (B) are mixed with a bead mill.

4. The oxide fine particle-containing resin composition according to any one of claims 1 to 3, wherein 100 parts by weight of the oxide fine particles (A) and 1 to 1000 parts by weight in terms of solid of the silyl group-containing organic polymer (B) are mixed.

5. The oxide fine particle-containing resin composition according to any one of claims 1 to 4, wherein in the silyl group-containing organic polymer (B), the content of the silyl groups in which a hydrolyzable group and/or a hydroxyl group is bonded to the silicon atom is in the range of 0.1 to 2 wt% in terms of silicon atoms relative to an organic polymer prior to the introduction of the specific silyl groups.

6. A cured product obtained from the oxide fine particle-containing resin composition of any one of claims 1 to 5.

7. A coating composition comprising the oxide fine particle-containing resin composition of any one of claims 1 to 5.

8. A multilayer structure comprising an organic base and a film on the organic base, the film being obtained from the coating composition of claim 7.

9. A process for producing an oxide fine particle-containing resin composition, comprising mixing: (A) silicon oxide fine particles and/or metal oxide fine particles; and (B) an organic polymer having a silyl group in which a hydrolyzable group and/or a hydroxyl group is bonded to the silicon atom, in an organic solvent in the presence of a basic compound, an acidic compound or a metal chelate compound.

10. The process according to claim 9, wherein the oxide fine particles (A) and the silyl group-containing organic polymer (B) are mixed in the presence of a basic compound.

11. The process according to claim 9 or 10, wherein the oxide fine particles (A) and the silyl group-containing organic polymer (B) are mixed with a bead mill.

12. The process according to any one of claims 9 to 11, wherein 100 parts by weight of the oxide fine particles (A) and 1 to 1000 parts by weight in terms of solid of the silyl group-containing organic polymer (B) are mixed.

13. The process according to any one of claims 9 to 12, wherein in the silyl group-containing organic polymer (B), the content of the silyl groups in which a hydrolyzable group and/or a hydroxyl group is bonded to the silicon atom is in the range of 0.1 to 2 wt% in terms of silicon atoms relative to an organic polymer prior to the introduction of the specific silyl groups.
